Europäisches Patentamt

European Patent Office

Office européen des brevets

(19)

(11) Veröffentlichungsnummer : **0 205 002**
**B1**

(12) **EUROPÄISCHE PATENTSCHRIFT**

(45) Veröffentlichungstag der Patentschrift :
26.04.89

(51) Int. Cl.⁴ : **G 01 N 30/60**

(21) Anmeldenummer : 86106861.7

(22) Anmeldetag : 21.05.86

(54) Chromatographiesäule.

(30) Priorität : 01.06.85 DE 3519725

(43) Veröffentlichungstag der Anmeldung :
17.12.86 Patentblatt 86/51

(45) Bekanntmachung des Hinweises auf die Patenterteilung : 26.04.89 Patentblatt 89/17

(84) Benannte Vertragsstaaten :
BE CH DE FR GB IT LI NL SE

(56) Entgegenhaltungen :
EP—A— 0 023 582
EP—A— 0 041 608
EP—A— 0 078 435
EP—A— 0 131 791
US—A— 4 283 280

(73) Patentinhaber : MERCK PATENT GESELLSCHAFT
MIT BESCHRÄNKTER HAFTUNG
Frankfurter Strasse 250 Postfach 4119
D-6100 Darmstadt (DE)

(72) Erfinder : Hauke, Günter
Im Seegraben 11
D-6109 Mühltal 2 (DE)
Erfinder : Sättler, Günther
Scribastrasse 15
D-6107 Reinheim 1 (DE)

## Beschreibung

Die Erfindung betrifft eine Chromatographiesäule, bestehend aus einem mit Sorbens gefüllten Metallrohr, das an beiden Enden mit Fritten- und Dichtelementen versehen ist, und wobei eine Verschraubung zum Anschluß von Kapillaren vorgesehen ist, die zumindest aus einer am Säulenrohr angebrachten Stützmutter und einer Überwurfmutter besteht.

Es sind bereits zahlreiche Säulen für die Chromatographie bekannt. Üblicherweise besitzen diese an beiden Enden ein Außengewinde oder eine Stützmutter mit einem Innen- oder Außengewinde, so daß mittels eines Gewindestopfens oder einer Überwurfmutter Kapillaranschlüsse zur Zu- und Abfuhr des Eluens angebracht werden können.

In neuerer Zeit werden auch vermehrt Säulenkartuschen angeboten, die über keine Verschraubung verfügen, sondern entweder in eine Kartuschenhalterung, wie z. B. in der DOS 29 30 962, der DOS 30 21 366 oder dem US Patent 4 283 280 beschrieben, oder in eine Säuleneinspannvorrichtung entsprechend der DOS 31 43 075 eingespannt werden.

Für den Anbieter, der seine Kunden sowohl mit Säulenkartuschen als auch mit Säulen mit Reduzierverschraubung versorgen will, bedeutet dies durch die zweigleisige Herstellung und verdoppelte Lagerhaltung eine erhebliche Kostenbelastung. Es bestand deshalb ein Bedürfnis nach Säulen, die sowohl als Kartuschensäulen eingesetzt als auch mit einer Reduzierverschraubung versehen werden können.

Es wurde nun gefunden, daß das Problem dadurch gelöst werden kann, daß an einer Säulenkartusche eine abnehmbare Verschraubung vorgesehen ist, wodurch die Säule wahlweise als Kartusche oder als Komplettsäule benutzt werden kann.

Gegenstand der Erfindung ist daher eine Chromatographiesäule, bestehend aus einem mit Sorbens gefüllten Metallrohr, das an beiden Enden mit Fritten- und Dichtelementen versehen ist, und wobei eine Verschraubung zum Anschluß von Kapillaren vorgesehen ist, die zumindest aus einer am Säulenrohr angebrachten Stützmutter und einer Überwurfmutter besteht, die dadurch gekennzeichnet ist, daß die Stützmutter aus 2 Halbschalen besteht und so bei abgeschraubter Überwurfmutter vom Säulenrohr abgenommen werden kann.

Die erfindungsgemäße Konstruktion hat nicht nur den Vorteil, daß künftig für jeden Säulentyp nur noch eine Version angeboten werden muß, sondern es wird darüberhinaus auch der Aufwand für die Reduzierverschraubungen erheblich vermindert. Für jeden Säulendurchmesser wird nämlich nur ein Verschraubungspaar benötigt. Beim Wechseln der Säule ist daher lediglich die Kartusche auszutauschen, während die Verschraubung weiter verwendet werden kann. Für den Anwender ergibt sich dadurch eine erhebliche Ersparnis bei den Anschaffungskosten.

In den Zeichnungen ist eine bevorzugte Ausführungsform der erfindungsgemäßen Säule gezeigt. Da die Säule vorzugsweise symmetrisch aufgebaut ist, ist jeweils nur ein Ende der Säule gezeichnet.

Figur I zeigt einen Schnitt durch ein Säulenende mit angebrachter Verschraubung.

Figur II zeigt einen Schnitt durch ein Säulenende mit in die Verschraubung eingesetzter Vorsäule.

Figur III zeigt das Säulenende mit Verschraubung als Explosionszeichnung.

Das Säulenrohr (1) wird üblicherweise befüllt mit einem Sorbens (2) und verschlossen mit einem Frittenelement (3) und einer Dichtung (4) an den Kunden ausgeliefert und kann in dieser Form, z. B. in einer Kartuschenhalterung oder Säuleneinspannvorrichtung, zum Einsatz kommen. In der Nähe des Säulenendes ist eine ringförmige Nut (5) vorgesehen, in die eine Auskragung (6) der zweigeteilten Stützmutter (7) eingreifen kann. Das Druckstück (8), das mit einer Gewindebohrung (9) versehen ist, kann dann mit Hilfe der Überwurfmutter (10), die gegen die Stützmutter (7) verschraubt wird, dichtend gegen die Dichtung (4) gepreßt werden.

Die Kartuschensäule ist damit durch einfaches Aufschrauben weniger Teile zu einer Säule mit Reduzierverschraubung geworden. Ebenfalls sehr einfach ist es, die erfindungsgemäße Säule mit einer Vorsäule (11) zu betreiben. Dazu wird einfach die Überwurfmutter (10) durch eine verlängerte Mutter (12) ersetzt. Zum Verschluß der Säule, z. B. beim Transport, kann das Druckstück (8) durch einen Blindstopfen verschlossen werden. Die erfindungsgemäße Säule kann in beliebigen Längen und Durchmessern gefertigt werden, wobei, wie bereits erwähnt, für Säulen gleichen Durchmessers jeweils nur 1 Verschraubungspaar angeschafft werde muß. Für die Säule und die Verschraubung werden die üblichen Materialien, wie insbesondere rostfreier Stahl, verwendet. Die Dichtung (4) ist vorzugsweise aus inerten Polymeren wie z. B. PTFE gefertigt, während die Fritte (3) aus Sintermetall, Keramik oder einem Gewebe bestehen kann.

Durch die einfache Handhabung und die preiswerte Anschaffung und Vorrathaltung steht damit eine vorteilhafte neue Säule für die Chromatographie zur Verfügung.

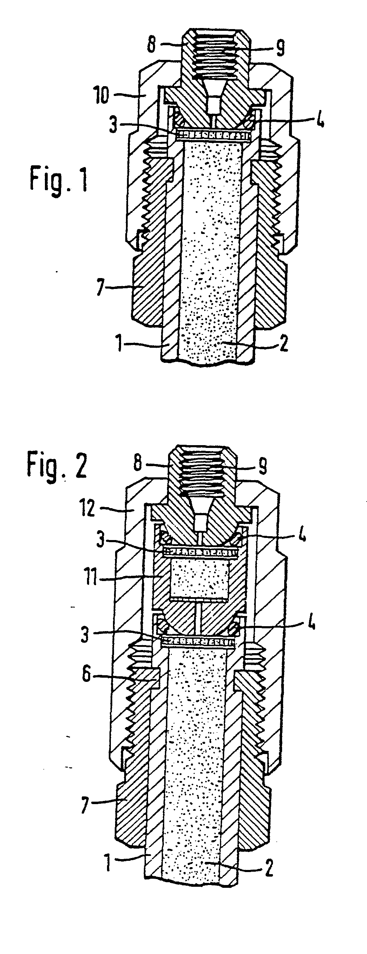

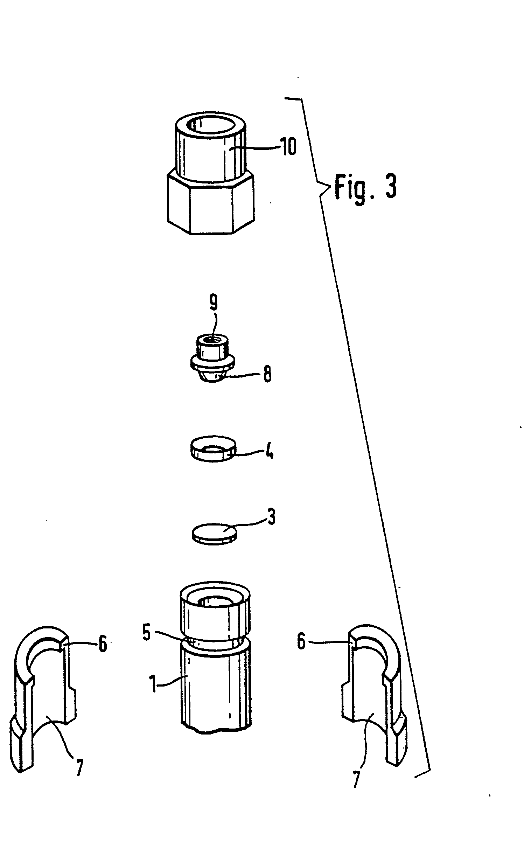

## Patentansprüche

1. Chromatographiesäule, bestehend aus einem mit Sorbens gefüllten Metallrohr, das an beiden Enden mit Fritten- und Dichtelementen versehen ist, und wobei eine Verschraubung zum Anschluß von Kapillaren vorgesehen ist, die zumindest aus einer am Säulenrohr angebrachten Stützmutter und einer Überwurfmutter besteht,

dadurch gekennzeichnet, daß die Stützmutter aus 2 Halbschalen besteht und so bei abgeschraubter Überwurfmutter vom Säulenrohr abgenommen werden kann.

2. Säule nach Anspruch 1, dadurch gekennzeichnet, daß zwischen dem Säulenrohr und der Überwurfmutter eine Vorsäule eingesetzt ist.

## Claims

1. Chromatography column, consisting of a metal tube which is filled with a sorbent and which is provided at both ends with sintered and sealing elements, a screw union consists at least of a supporting nut fitted to the column tube and a cap nut, characterized in that the supporting nut consists of two half-shells and can thus be removed from the column tube after the cap nut has been unscrewed.

2. Column according to claim 1, characterized in that a precolumn is inserted between the column tub, and the cap nut.

## Revendications

1. Colonne de chromatographie consistant en un tube métallique rempli d'un sorbant, munie à ses deux extrémités d'éléments de frittage et d'étanchéité, dans laquelle est prévu un raccord fileté pour le raccordement de capillaires, ce raccord consistant au moins en un écrou de base et un écrou chapeau installés sur le tube de la colonne, caractérisée en ce que l'écrou de base consiste en deux demi-écrous et peut ainsi être enlevé du tube de la colonne lorsque l'écrou chapeau est dévissé.

2. Colonne selon la revendication 1, caractérisée en ce qu'une colonne préliminaire est introduite entre le tube de la colonne et l'écrou chapeau.

EP 0 205 002 B1

Fig. 1

Fig. 2

1

Fig. 3